# EUROPEAN PATENT SPECIFICATION

(11) **EP 4 265 926 B1**
(45) Date of publication and mention of the grant of the patent: **04.03.2026**
(21) Application number: 23168390.5
(22) Date of filing: 18.04.2023
(51) Int. Cl.: F16B 21/16, F16B 21/12, F21V 21/005, F21W 131/406

(54) **DEVICE FOR CONNECTING STAGE FIXTURES**
VORRICHTUNG ZUM VERBINDEN VON BÜHNENAUSSTATTUNG
DISPOSITIF POUR CONNECTER DES ACCESSOIRES DE SCÈNE

(30) Priority: 22.04.2022 PL 44099822
(43) Date of publication of application: 25.10.2023
(73) Proprietor: Portman Lights Spolka z Ograniczona Odpowiedzialnoscia, 81-571 Gdynia (PL)
(72) Inventor: Sztejna, Lukasz, 81-508 Gdynia (PL); Karczewski, Maciej, 81-322 Gdynia (PL)
(74) Representative: JWP Patent & Trademark Attorneys

(56) References cited:
- JP-U- S5 659 319
- US-A- 3 980 408
- US-A1- 2004 055 244

## Description

The subject of the present invention is a connecting device for stage fixtures, in particular for connecting stage devices or stage accessories. The device is used to connect fixtures under difficult conditions with insufficient lighting and at difficult-to-access locations. The device can also be used to connect devices under similar conditions outside the stage as well. Various solutions are known from the prior art the purpose of which is to connect various structural elements. One such well-known solution is a fixing pin which includes a pin, a coaxial sleeve, and a pressing spring arranged inside the sleeve which positions the fixing pin in a closed position. Usually, a retracting handle for unlocking the pin is attached to the other end of the pin. Typically, the fixing pin cooperates with a housing that has a hole and with an element that is being connected which includes fixing holes that are matched to the fixing pin.

By way of example, from the prior art, CN208731120 is known that discloses a manual bicycle device for adjusting the height of an electric bicycle saddle. The solution includes an adjustable saddle with a seat on a vertical tube in a vehicle frame, and a round pull pin including a spring, a set screw in the vertical tube of the seat to form a swivelling connection. This is a typical application of the fixing pin; the disadvantage of such a solution is the necessity to hit the fixing hole, which is not an issue in the case of adjusting the height of the saddle. However, under conditions of difficult visibility and/or limited access by both hands and/or variable orientation, the use of the fixing pin cooperating with the hole in the connecting tube is ineffective. Stage fixtures can be connected in any direction, including also upwardly, and not only in line with the direction of gravity. The user must aim the pin into the hole to lock the two elements which need to be precisely matched together in two planes, and any dirt or mismatches may cause a risk of incorrect securing of the connection, and under difficult lighting conditions and/or limited manoeuvrability, the user may not be able to verify the correct position of the fixing pin. This creates a serious risk of accident for people using the stage due to an accidental disconnection of stage fixtures. Moreover, in the bicycle saddle, the saddle is fixedly attached to the connecting tube, i.e. one element has a fixedly attached fastener. There is often a need for stage fixtures to come together by being butted together, without gaps. Then, unlike in the case of the saddle, aligning the fixing hole with the fixing pin may pose difficulties, especially when the fastener is invisible, as it is completely hidden in a socket.

By way of a further example, from the prior art, US 2004/0055244 A1 is known a display framework connection system comprising a plurality of frame members, preferably tubular, a plurality of end flanges, and a hub system. The hub system can comprise a hub plate assembly and/or a hub casting assembly. In addition, at least one clamp assembly, preferably cylindrical, can be included for circumferential attachment to the outer surface of the frame members to provide for selective removable fastening of various attachments and accessories at positions along the length of the frame members. The hub plate assembly and the hug casting assembly can be connected individually to the frame members, or in combination, to enable selective angular configuration of the frame members to construct a frame construction, such as those commonly utilized in display frame systems.

The connecting device according to the present invention solves the problem of combining the fixing pin with the fixing hole, while at the same time providing an easy-to-operate, dirt-resistant device that allows to connect the elements without gaps in between, to pull together the elements that are being connected, to fix the orientation relative to each other of the elements that are being connected and that, thanks to increased reliability, provides a secure connection for stage fixtures, in particular when working under difficult lighting conditions and with limited access to the device.

The connecting device for stage fixtures according to the present invention includes a connecting shank and at least one fixing pin connected to a housing of at least one connecting socket, wherein the connecting shank is detachably connected to the at least one connecting socket and protected against disconnection by the at least one fixing pin. The connecting device is characterized in that the connecting shank with a substantially longitudinal shape has a square cross-section. This prevents the shank from rotating about its longitudinal axis. The connecting shank includes at least one fixing slot with a cross-section similar to the letter U, and the fixing slot extends over the entire transverse circumference of the connecting shank. This facilitates connecting the connecting socket to the connecting shank, as there is no need to aim at a hole in the connecting shank, and at the same time the connecting shank is resistant to dirt which may be pushed out into the remaining free space in the fixing slot by the fixing pin. All the features increase the firmness and security of the connection.

It is preferable that the connecting shank has at least one end contoured in a conical shape. This facilitates connecting the socket by means of the connecting shank, as the surface of the cone raises the fixing pin when the connecting shank is inserted into the connecting socket, and then it causes the connection to snap when the fixing pin encounters the first fixing slot. It is preferable that the at least one fixing slot is formed at the location where the end of the connecting shank that is contoured in a conical shape connects with the portion of the connecting shank that has a square cross-section.

It is preferable that a wall of the fixing slot, which is located closer to the end of the connecting shank, is inclined to the longitudinal axis of the connecting shank such that the width of the slot narrows towards the longitudinal axis of the connecting shank. Thanks to this, the connecting shank causes an outer edge of one connecting socket to be pressed to a corresponding other edge of the other connecting socket or a housing to which the connecting shank is mounted.

It is preferable that the fixing pin includes a locking protection against unintentional extraction.

It is preferable that the locking protection against unintentional extraction includes a contoured spring plate as well as a working slot and a locking socket in the housing of the connecting socket, wherein the contoured spring plate is movably connected to the fixing pin, and in a secured position it is locked in the locking socket, while in an unlocked position it is arranged in the working slot.

It is preferable that the contour of the spring plate includes five consecutive sections, wherein four sections are situated at a right angle relative to each other to form a stepped structure. The first section includes a hole for the end of the fixing pin which connects to a retracting handle of the fixing pin, wherein the spring plate is mounted movably about the axis of the fixing pin, while at the same time the spring plate is mounted immovably in relation to the longitudinal axis of the fixing pin. Further, the fifth section of the spring plate is inclined at an acute angle of 30 to 60 degrees relative to the fourth section.

It is preferable that the working gap and the locking socket in the housing of the connecting socket form a hole which has a shape similar to one eighth of a circular segment with a center in the axis of the fixing pin. The hole is extended by a hole with a diameter corresponding to the diameter of the sleeve of the fixing pin, and on straight line segments of the edges it is extended by a half of the width of the spring plate. The hole additionally includes a sickle-shaped projection with arcuate concentric edges connected by a straight edge which is parallel to the opposite straight line segment of the edge of the hole. On the edge of the hole that is spaced the farthest away from the axis of the fixing pin, a triangular locking projection is located. The hole is loosely fitted to a locking plate.

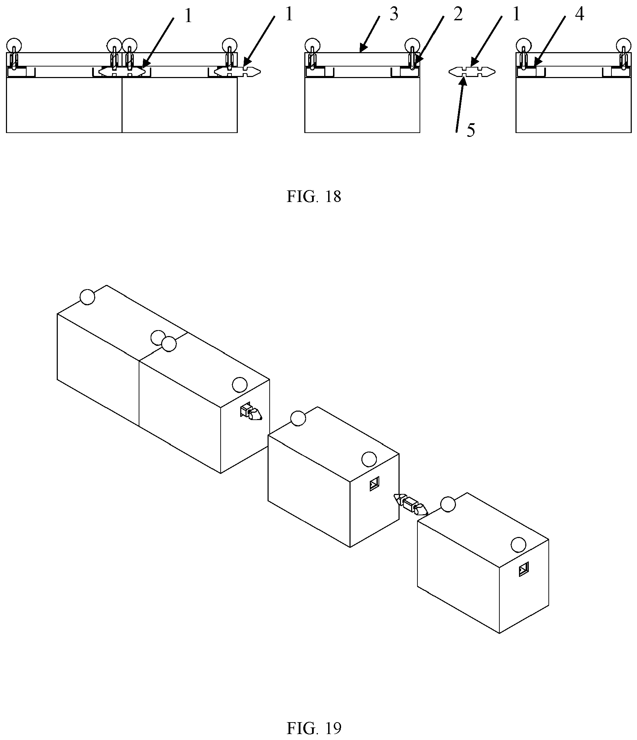

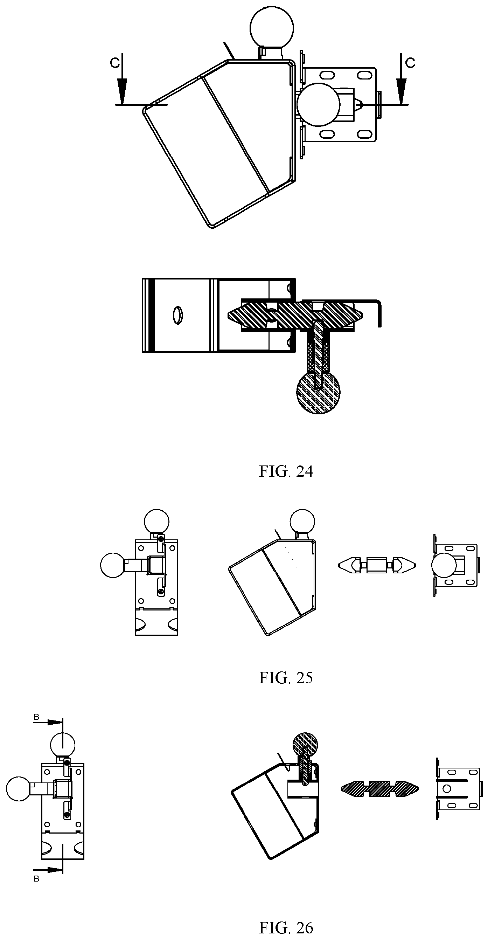

The subject of the present invention, in embodiments, is visualized in the drawings, in which: Fig. 1 shows a side view of the connecting shank, Fig. 2 shows a sectional view of the connecting shank along its axis, Fig. 3 shows a front view of the connecting shank, Fig. 4 shows an axonometric view of the connecting shank, Fig. 5 schematically shows a connection of two connecting sockets via the connecting shank, Fig. 6 schematically shows the fixing pin, Figs. 7-8 show the fixing pin with the locking protection, Figs. 10-12 show the working gap and the locking socket in the housing of the connecting device, Figs. 13-17 show, in different views, an element of the locking protection - the spring plate, Figs. 18-19 illustrate the device's principle of operation when connecting stage fixtures, Figs. 20-22 show embodiments of the device in housings of stage fixtures, Figs. 23-26 show exemplary housings in a connected and disconnected state, together with their sectional views.

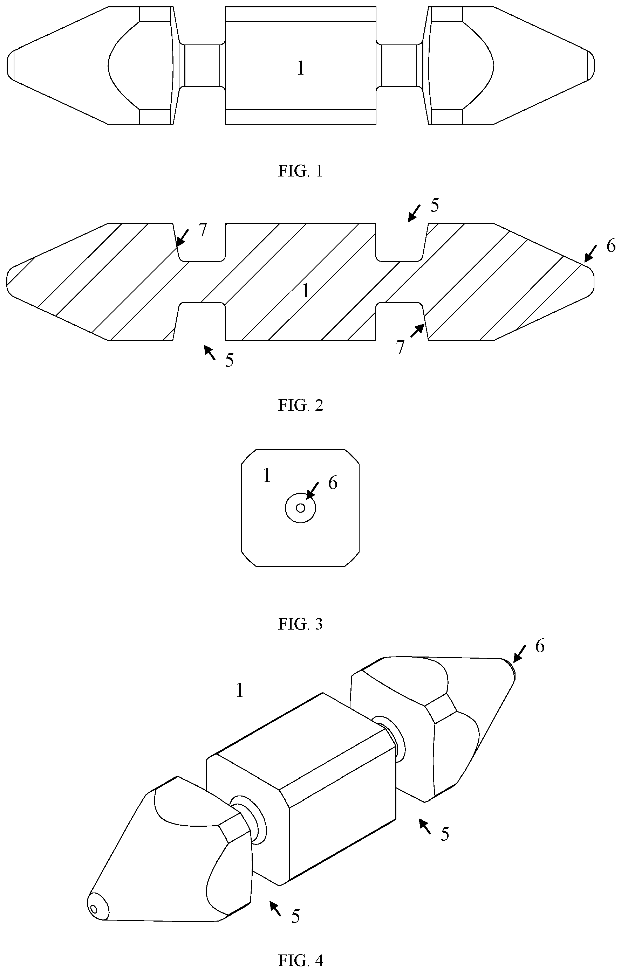

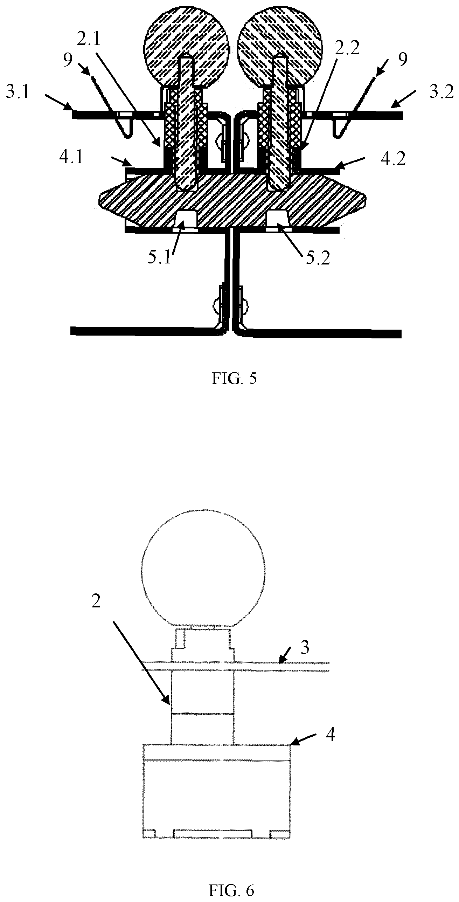

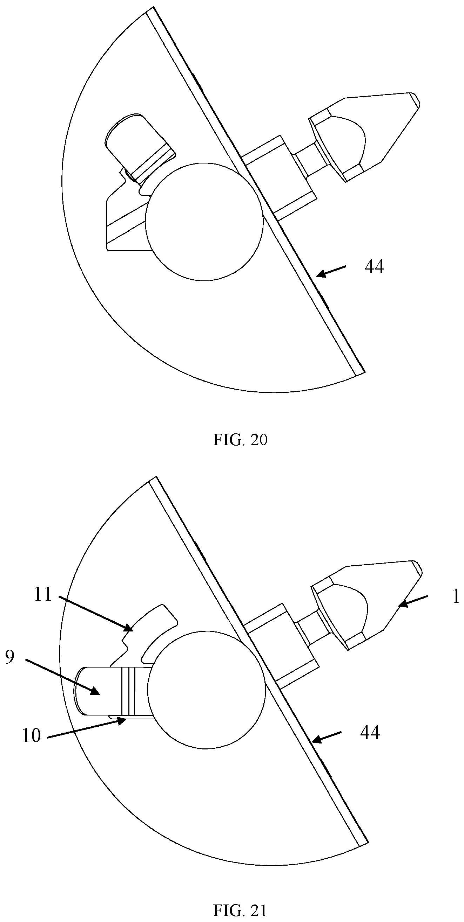

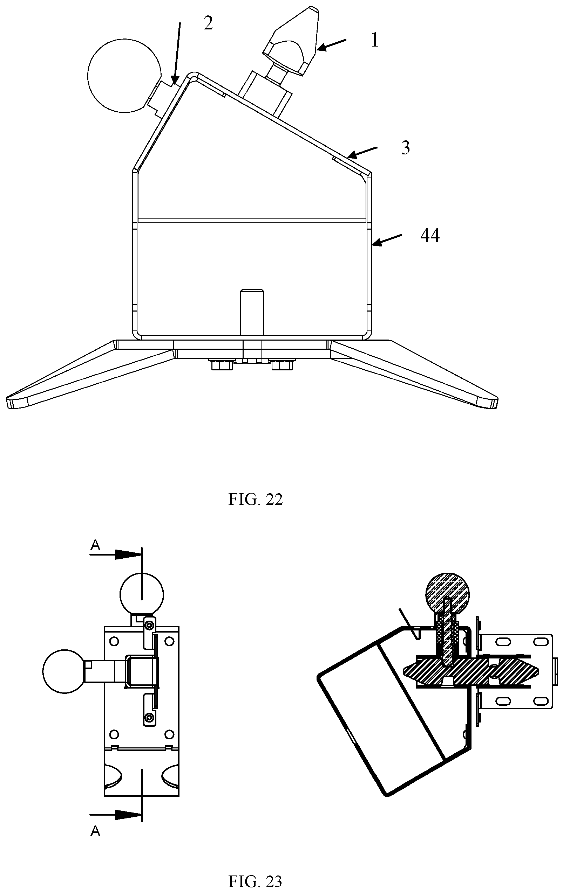

According to an embodiment, the connecting device for stage fixtures includes a connecting shank 1 (Figs. 1-4) and two fixing pins 2.1 and 2.2 connected to housings 3.1 and 3.2 of connecting sockets 4.1 and 4.2 (Fig. 5). The housing 3 (3.1, 3.2) of the connecting socket 4 (4.1, 4.2) is fixedly integrated with a housing of a stage fixture; Fig. 5 shows the connecting sockets 4, 4.1 and 4.2. In another variant, the housing 3 of the connecting socket 4 may be connected to a housing 44 (Figs. 20-22) of a stage fixture outside its outline, at any angle to the plane of the housing of the fixture - by way of example, 45 degrees. The connecting shank 1 is detachably connected to the two connecting sockets 4.1 and 4.2, one of the sockets 4.1 is located in the housing 3.1 inside a first stage fixture, by way of example, in the housing of a first lamp, and the other socket is located in the housing 3.2 inside a second stage fixture, by way of example, in the housing of a second lamp. The connecting shank 1 is protected against disconnection by the first fixing pin 2.1 of the first lamp and the second fixing pin 2.2 of the second lamp. The connecting shank 1 has a longitudinal shape with a square cross-section. The connecting shank 1 also includes two fixing slots 5.1 and 5.2 with a cross-section similar to the letter U. Each slot 5.1 and 5.2 comprises the entire transverse circumference of the connecting shank 1.

The connecting shank 1 has ends contoured in conical shapes which transition into a square cross-section. This enables to fix relative to each other the planes of the housings of stage fixtures - by way of example, lamps - with an accuracy to a 90-degree rotation relative to the axis of the connecting shank 1 and the axes of the connecting sockets 4.1 and 4.2.

The fixing slots 5.1 and 5.2 are located in the connecting shank 1 at the location where the ends 6 of the connecting shaft 1 that are contoured in a conical shape transition into a square cross-section. One of the walls 7 of the fixing slot 5 (5.1, 5.2), which is located closer to the end 6 of the connecting shank 1, is inclined to the longitudinal axis of the connecting shank 1 such that the width of the slot 5 narrows as it gets closer to the longitudinal axis of the connecting shank 1 (Figs. 1-5). Thanks to this, the connecting shank causes an outer edge of the first connecting socket 4.1 to be pressed to a corresponding other edge of the second connecting socket 4.2 when the fixing pins 2.1 and 2.2 are inserted into the slots 5.1 and 5.2. In another variant, when the connecting shank has only one end 6, and at the other end it is fixedly attached to a housing of a stage fixture (by way of example, a lamp), the shape of the slot 5 causes the edge of the connecting socket to be pressed to the housing of the stage fixture adjacent to the location where the connecting shank 1 connects with that housing.

In another aspect of the embodiment, the fixing pin 2 includes a locking protection 8 against unintentional extraction. The locking protection 8 against unintentional extraction includes a contoured spring plate 9 as well as a working slot 10 and a locking socket 11 in the housing 3 of the connecting socket 4, wherein the contoured spring plate 9 is movably connected to the fixing pin 2, and in a secured position it is locked in the locking socket 11, while in an unlocked position it is in the working slot 10. By way of example, Figs. 20-21 show the spring plate 9 in two positions; in Fig. 20, in a locked position, the spring plate 9 rests in the locking socket 11, and in Fig. 21, in an unlocked position, it rests in the working slot 10 and may be extracted out of it together with the fixing pin 2.

The housing 3 of the connecting socket 4 may have an open or closed form; it is sufficient for a front wall to include a hole of the connecting socket 4, and an adjacent wall including an outer portion of the fixing pin 2 is perpendicular thereto. The fixing pin 2 is swivellingly movable in an axis perpendicular to the axis of the connecting socket 4, as in typical applications of the fixing pins. The wall of the housing 3 that includes the outer portion of the fixing pin 2 also includes the working slot 10 and the locking socket 11 which form a hole with a shape similar to the letter L, wherein the axis of the longer portion passes through the axis of the fixing pin 2.

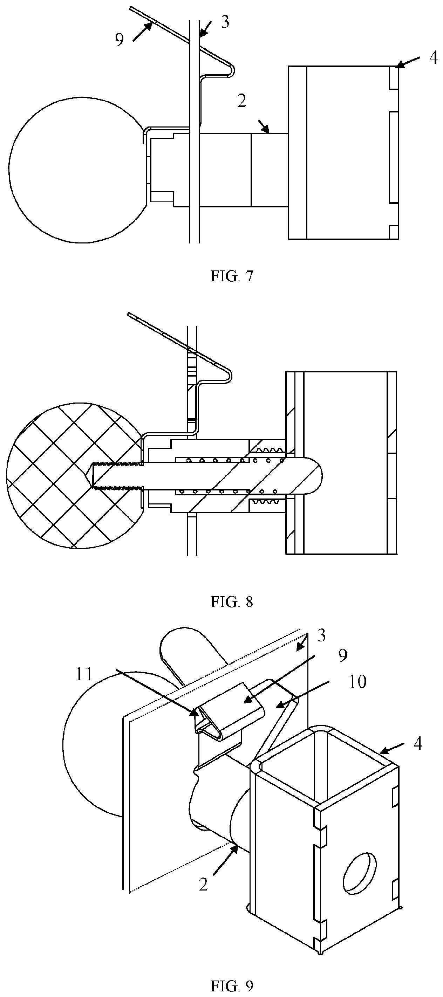

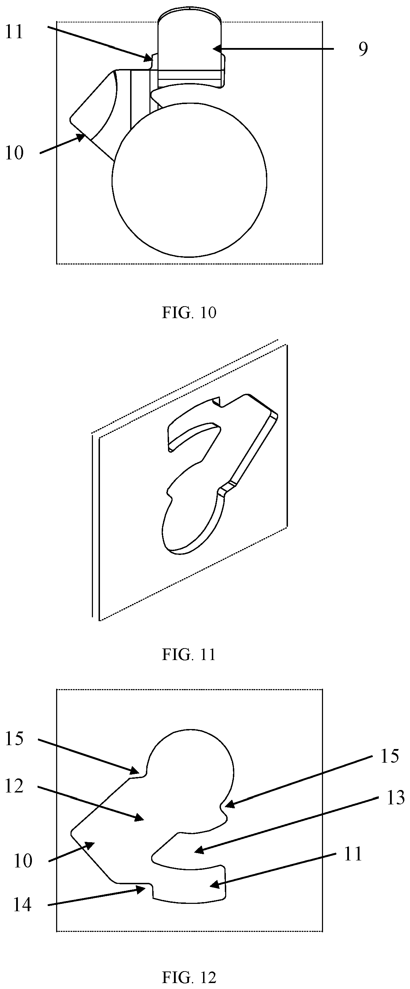

In another example, the shape of a hole in the housing 3 is described which comprises the working slot 10 and the locking socket 11. This hole has a shape similar to 1/8 of a circular segment with a center overlapping with the axis of the fixing pin 2 (Figs. 10-12). The radius of the segment corresponds to the length of the spring plate 9 at the height of its third section which extends substantially parallel to the wall of the housing 3 on its inner side (Figs. 7 - 9). Additionally, the hole is extended by a round hole with a radius corresponding to the diameter of the sleeve of the fixing pin 2 that has a center in the axis of this pin. Also, straight edges of the circular segment are extended by a half of the width of the spring plate 9 in a direction perpendicular to these edges (and outwardly). The hole 12 includes a sickle-shaped projection 13 that blocks the movement of the plate and the fixing pin 2 connected therewith when the spring plate 9 is in the locked position. The sickle-shaped projection 13 includes two edges constituting two concentric line segments of arcs that have a center in the axis of the fixing pin 2 and are connected by a straight edge which is parallel to the opposite edge of the hole 12 in the housing 3 and is located at a distance corresponding to the width of the spring plate 9. Additionally, the edge of the hole that is spaced the farthest apart from the axis of the fixing pin includes a triangular locking projection 14 which locks the spring plate 9 in the locking socket; to release it, a free end of the plate has to be pressed towards the fixing pin 2 and the plate has to be rotated towards the working slot 10 with a substantially rectangular outline. In the vicinity of the hole for the fixing pin 2, small projections 15 are located that fix the position of the portion of the spring plate 9 that is closer to the axis of the fixing pin 2 in the working slot 10 or in the locking socket 11.

The locking socket 11 forming a lower portion of the letter L includes a locking projection with a shape similar to a triangular tooth on which the spring plate 9 rests in the locked position. Compressing the spring plate 9 enables to rotate it to a position in the working slot 10 in which the movement of the fixing pin 2 is not blocked, thus it is possible to disconnect the connecting shank 1 from the connecting socket 4.

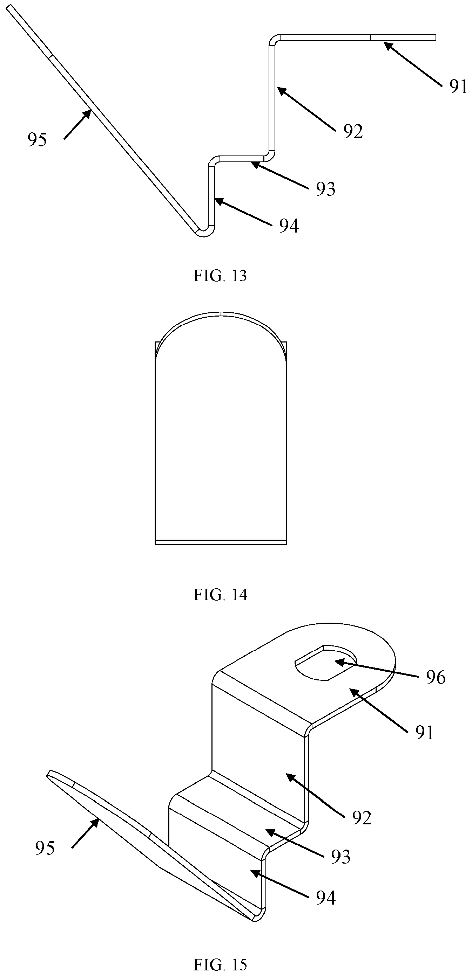

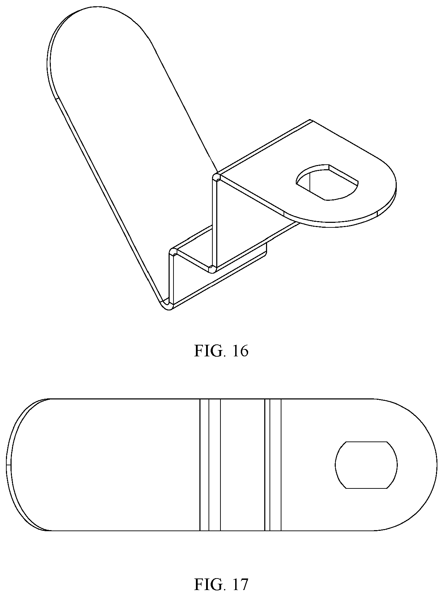

The contour of the spring plate 9 is shown illustratively in Figs. 13 - 17. The plate includes five sections, wherein four sections are situated at a right angle relative to each other, and additionally the first section includes a hole for the end of the fixing pin which connects to a retracting handle of the fixing pin (Figs. 15 - 17). The last, fifth segment of the spring plate 9 is inclined at an acute angle - by way of example, 45 degrees - relative to the fourth section. Such a shape of the plate is matched to the working slot 10 and the locking socket 11 and prevents the fixing pin from being raised in the locked position.

## Claims

1. A connecting device for stage fixtures, including a connecting shank (1) and at least one fixing pin (2) connected to a housing (3) of at least one connecting socket (4), wherein the connecting shank (1) is detachably connected to the at least one connecting socket (4) and protected against disconnection by the at least one fixing pin (2), wherein the connecting shank (1) includes at least one fixing slot (5) with a cross-section similar to the letter U, and the fixing slot (5) extends over the entire transverse circumference of the connecting shank (1) **characterized in that** the connecting shank (1) with a substantially longitudinal shape has a square cross-section.

2. The connecting device according to claim 1, **characterized in that** the connecting shank (1) has at least one end (6) contoured in a conical shape.

3. The connecting device according to claim 2, **characterized in that** the at least one fixing slot (5) is formed at the location where the end (6) of the connecting shank (1) that is contoured in a conical shape connects with the portion of the connecting shank (1) that has a square cross-section.

4. The connecting device according to claim 1, **characterized in that** a wall (7) of the fixing slot (5), which is located closer to the end (6) of the connecting shank (1), is inclined to the longitudinal axis of the connecting shank (1) such that the width of the slot (5) narrows towards the longitudinal axis of the connecting shank (1).

5. The connecting device according to claim 1, **characterized in that** the connecting socket (4) has a cross-section corresponding to the cross-section of the connecting shank (1) and is connected to the housing (3).

6. The connecting device according to claim 5, **characterized in that** the connecting socket (4) is formed of two portions made of a sheet, wherein a first portion is made of a rectangular piece bent into a trough which is closed by a second portion of a sheet to form the shape of a regular square prism, wherein the solid is open from the side of both bases; on one of the lateral walls, a hole for the fixing pin is located and a sleeve of the fixing pin (2) is mounted.

7. The connecting device according to claim 1, **characterized in that** the fixing pin (2) includes a locking protection (8).

8. The connecting device according to claim 7, **characterized in that** the locking protection includes a contoured spring plate (9) as well as a working slot (10) and a locking socket (11) in the housing (3) of the connecting socket (4), wherein the contoured spring plate (9) is movably connected to the fixing pin (2), and in a secured position it is locked in the locking socket (11), while in an unlocked position it is arranged in the working slot (10).

9. The connecting device according to claim 8, **characterized in that** the contour of the spring plate (9) includes five consecutive sections (91, 92, 93, 94, 95), wherein four sections (91, 92, 93, 94) are situated at a right angle relative to each other to form a stepped structure, and the first section (91) includes a hole for the end of the fixing pin which connects to a retracting handle of the fixing pin (2), wherein the spring plate (9) is mounted movably about the axis of the fixing pin (2), while at the same time the spring plate (9) is mounted immovably in relation to the longitudinal axis of the fixing pin (2); further, the fifth section (95) of the spring plate (9) is inclined at an acute angle of 30 to 60 degrees relative to the fourth section (94).

10. The connecting device according to claim 8, **characterized in that** the working slot (10) and the locking socket (11) in the housing (3) of the connecting socket (4) form a hole (12) which has a shape similar to one eighth of a circular segment with a radius in the axis of the fixing pin (2), wherein the hole is extended by a hole with a diameter corresponding to the diameter of the sleeve of the fixing pin (2), and on straight line segments of the edges it is extended by a half of the width of the spring plate (9), the hole (12) additionally includes a sickle-shaped projection (13) with arcuate concentric edges connected by a straight edge which is parallel to the opposite straight line segment of the edge of the hole (12), and on the edge of the hole (12) that is spaced the farthest away from the axis of the fixing pin (2), a triangular locking projection (14) is located.

## Patentansprüche

1. Die Verbindungsvorrichtung für Tischarmaturen, umfassend einen Verbindungsschaft (1) und mindestens einen mit einem Gehäuse (3) mindestens einer Verbindungsbuchse (4) verbundenen Befestigungsstift (2), wobei der Verbindungsschaft (1) mit der mindestens einen Verbindungsbuchse (4) lösbar verbunden und durch den mindestens einen Befestigungsstift (2) gegen Lösen geschützt ist, wobei der Verbindungsschaft (1) mindestens einen Befestigungsschlitz (5) mit einem dem Buchstaben U ähnlichen Querschnitt umfasst und sich der Befestigungsschlitz (5) über den gesamten Querumfang des Verbindungsschaftes (1) erstreckt, **dadurch gekennzeichnet, dass** der Verbindungsschaft (1) mit einer im Wesentlichen länglichen Form einen quadratischen Querschnitt aufweist.

2. Die Verbindungsvorrichtung nach Anspruch 1, **dadurch gekennzeichnet, dass** der Verbindungsschaft (1) mindestens ein konisch konturiertes Ende (6) aufweist.

3. Die Verbindungsvorrichtung nach Anspruch 2, **dadurch gekennzeichnet, dass** der mindestens eine Befestigungsschlitz (5) an der Stelle ausgebildet ist, an der sich das konisch konturierte Ende (6) des Verbindungsschafts (1) mit dem Abschnitt des Verbindungsschafts (1) verbindet, der einen quadratischen Querschnitt aufweist.

4. Die Verbindungsvorrichtung nach Anspruch 1, **dadurch gekennzeichnet, dass** eine Wand (7) des Befestigungsschlitzes (5), die näher an dem Ende (6) des Verbindungsschaftes (1) liegt, zu der Längsachse des Verbindungsschaftes (1) geneigt ist, so dass sich die Breite des Schlitzes (5) zu der Längsachse des Verbindungsschaftes (1) hin verjüngt.

5. Die Verbindungsvorrichtung nach Anspruch 1, **dadurch gekennzeichnet, dass** die Verbindungsbuchse (4) einen dem Querschnitt des Verbindungsschafts (1) entsprechenden Querschnitt aufweist und mit dem Gehäuse (3) verbunden ist.

6. Die Verbindungsvorrichtung nach Anspruch 5, **dadurch gekennzeichnet, dass** die Verbindungsbuchse (4) aus zwei Abschnitten gebildet ist, die aus einer Platte hergestellt sind, wobei ein erster Abschnitt aus einem rechteckigen Stück hergestellt ist, das in ein Becken gebogen ist, die durch einen zweiten Abschnitt einer Platte geschlossen ist, um die Form eines regelmäßigen quadratischen Prismas zu bilden, wobei der Festkörper von der Seite beider Basen offen ist; an einer der Seitenwände befindet sich ein Loch für den Befestigungsstift und eine Hülse des Befestigungsstifts (2) ist montiert.

7. Die Verbindungsvorrichtung nach Anspruch 1, **dadurch gekennzeichnet, dass** der Befestigungsstift (2) einen Verriegelungsschutz (8) aufweist.

8. Die Verbindungsvorrichtung nach Anspruch 7, **dadurch gekennzeichnet, dass** der Verriegelungsschutz eine konturierte Federplatte (9) sowie einen Arbeitsschlitz (10) und eine Verriegelungsbuchse (11) in dem Gehäuse (3) der Verbindungsbuchse (4) umfasst, wobei die konturierte Federplatte (9) beweglich mit dem Befestigungsstift (2) verbunden ist und in einer gesicherten Position in der Verriegelungsbuchse (11) verriegelt ist, während es in einer entriegelten Position in dem Arbeitsschlitz (10) angeordnet ist.

9. Die Verbindungsvorrichtung nach Anspruch 8, **dadurch gekennzeichnet, dass** die Kontur der Federplatte (9) fünf aufeinanderfolgende Abschnitte (91, 92, 93, 94, 95) umfasst, wobei vier Abschnitte (91, 92, 93, 94) in einem rechten Winkel zueinander angeordnet sind, um eine abgestufte Struktur zu bilden, und der erste Abschnitt (91) ein Loch für das Ende des Befestigungsstiftes umfasst, das mit einem zurückziehenden Griff des Befestigungsstiftes (2) verbunden ist, wobei der Federplatte (9) beweglich um die Achse des Befestigungsstiftes (2) gelagert ist, während gleichzeitig der Federplatte (9) unbeweglich in Bezug auf die Längsachse des Befestigungsstiftes (2) gelagert ist; ferner ist der fünfte Abschnitt (95) der Federplatte (9) in einem spitzen Winkel von 30 bis 60 Grad relativ zu dem vierten Abschnitt (94) geneigt.

10. Die Verbindungsvorrichtung nach Anspruch 8, **dadurch gekennzeichnet, dass** der Arbeitsschlitz (10) und die Verriegelungsbuchse (11) im Gehäuse (3) der Verbindungsbuchse (4) ein Loch (12) bilden, das eine Form ähnlich einem Achtel eines Kreissegments mit einem Radius in der Achse des Befestigungsstifts (2) aufweist, wobei das Loch durch ein Loch mit einem Durchmesser, der dem Durchmesser der Hülse des Befestigungsstifts (2) entspricht, verlängert ist, und auf geraden Kantensegmenten um eine Hälfte der Breite der Federplatte (9) verlängert ist, das Loch (12) zusätzlich einen sichelförmigen Vorsprung (13) mit bogenförmigen konzentrischen Kanten umfasst, der durch eine gerade Kante verbunden ist, die parallel zu dem gegenüberliegenden geraden Segment der Kante des Lochs (12) ist, und auf der Kante des Lochs (12), die am weitesten von der Achse des Befestigungsstifts (2) beabstandet ist, ein dreieckiger Verriegelungsvorsprung (14) angeordnet ist.

## Revendications

1. Dispositif de connexion pour appareils de scène, comprenant une tige de connexion (1) et au moins une broche de fixation (2) connectée à un boîtier (3) d'au moins une douille de connexion (4), dans lequel la tige de connexion (1) est connectée de manière amovible à la au moins une douille de connexion (4) et protégée contre la déconnexion par la au moins une broche de fixation (2), dans lequel la tige de connexion (1) comprend au moins une fente de fixation (5) avec une section transversale similaire à la lettre U, et la fente de fixation (5) s'étend sur toute la circonférence transversale de la tige de connexion (1), **caractérisé en ce que** la tige de connexion (1) avec une forme sensiblement longitudinale a une section transversale carrée

2. Dispositif de connexion selon la revendication 1, **caractérisé en ce que** la tige de connexion (1) a au moins une extrémité (6) profilée en forme conique.

3. Dispositif de connexion selon la revendication 2, **caractérisé en ce que** la au moins une fente de fixation (5) est formée à l'endroit où l'extrémité (6) de la tige de connexion (1) qui est profilée en forme conique se connecte à la partie de la tige de connexion (1) qui a une section transversale carrée.

4. Dispositif de connexion selon la revendication 1, **caractérisé en ce qu'**une paroi (7) de la fente de fixation (5), qui est située plus près de l'extrémité (6) de la tige de connexion (1), est inclinée par rapport à l'axe longitudinal de la tige de connexion (1) de sorte que la largeur de la fente (5) se rétrécit vers l'axe longitudinal de la tige de connexion (1).

5. Dispositif de connexion selon la revendication 1, **caractérisé en ce que** la douille de connexion (4) a une section transversale correspondant à la section transversale de la tige de connexion (1) et est connectée au boîtier (3).

6. Dispositif de connexion selon la revendication 5, **caractérisé en ce que** la douille de connexion (4) est formée de deux parties faites d'une feuille, dans lequel une première partie est faite d'une pièce rectangulaire pliée dans une auge qui est fermée par une seconde partie d'une feuille pour former la forme d'un prisme carré régulier, dans lequel le solide est ouvert du côté des deux bases ; sur l'une des parois latérales, un trou pour la broche de fixation est situé et un manchon de la broche de fixation (2) est monté.

7. Dispositif de connexion selon la revendication 1, **caractérisé en ce que** la broche de fixation (2) comprend une protection de verrouillage (8).

8. Dispositif de connexion selon la revendication 7, **caractérisé en ce que** la protection de verrouillage comprend une plaque à ressort profilée (9) ainsi qu'une fente de travail (10) et une douille de verrouillage (11) dans le boîtier (3) de la douille de connexion (4), dans lequel la plaque à ressort profilée (9) est connectée de manière mobile à la broche de fixation (2), et dans une position sécurisée, elle est verrouillée dans la douille de verrouillage (11), tandis que dans une position déverrouillée, elle est agencée dans la fente de travail (10).

9. Dispositif de connexion selon la revendication 8, **caractérisé en ce que** le contour de la plaque à ressort (9) comprend cinq sections consécutives (91, 92, 93, 94, 95), dans lequel quatre sections (91, 92, 93, 94) sont situées à angle droit les unes par rapport aux autres pour former une structure étagée, et la première section (91) comprend un trou pour l'extrémité de la broche de fixation qui se connecte à une poignée de rétraction de la broche de fixation (2), dans lequel la plaque à ressort (9) est montée de manière mobile autour de l'axe de la broche de fixation (2), tandis que dans le même temps la plaque à ressort (9) est montée de manière immobile par rapport à l'axe longitudinal de la broche de fixation (2) ; en outre, la cinquième section (95) de la plaque à ressort (9) est inclinée à un angle aigu de 30 à 60 degrés par rapport à la quatrième section (94).

10. Dispositif de connexion selon la revendication 8, **caractérisé en ce que** la fente de travail (10) et la douille de verrouillage (11) dans le boîtier (3) de la douille de connexion (4) forment un trou (12) qui a une forme similaire à un huitième de segment circulaire avec un rayon dans l'axe de la broche de fixation (2), dans lequel le trou est prolongé par un trou avec un diamètre correspondant au diamètre du manchon de la broche de fixation (2), et sur les segments de ligne droite des bords, il est prolongé par la moitié de la largeur de la plaque à ressort (9), le trou (12) comprend en outre une saillie en forme de faucille (13) avec des bords concentriques arqués connectés par un bord droit qui est parallèle au segment de ligne droite opposé du bord du trou (12), et sur le bord du trou (12) qui est le plus éloigné de l'axe de la broche de fixation (2), une saillie de verrouillage triangulaire (14) est située.
